# EUROPEAN PATENT APPLICATION

(11) **EP 4 760 940 A1**
(43) Date of publication of application: **17.06.2026**
(21) Application number: 24851150.3
(22) Date of filing: 12.08.2024
(51) Int. Cl.: H01M 50/358, H01M 50/244, H01M 50/35, H01M 50/30, H01M 50/209, H01M 50/249, H01M 50/502, H01M 50/367

(54) **BATTERY PACK AND POWER DEVICE**

(30) Priority: 10.08.2023 CN 202322155824 U; 10.08.2023 CN 202322162382 U; 15.08.2023 CN 202322191076 U
(71) Applicant: SVOLT Energy Technology Co., Ltd., Changzhou, Jiangsu 213200 (CN)
(72) Inventor: ZHAO, Jincheng, hangzhou, Jiangsu 213200 (CN)
(74) Representative: Michalski Hüttermann & Partner mbB
(86) International application number: PCT/CN2024/111554
(87) International publication number: WO 2025/031506

(57) **Abstract**

The present application relates to the technical field of batteries, and discloses a battery pack and a power unit. The battery pack includes an edge beam, a first protective plate, a second protective plate, and a battery module, where the edge beam is formed in a ring shape, the edge beam has a first cavity inside, a first through hole is provided on a peripheral wall of the edge beam, and a first explosion-proof valve is provided in the first through hole; the first protective plate is arranged at an end of the edge beam in an axial direction and connected to the edge beam, and the first protective plate is configured to block the end of the edge beam in the axial direction and define a mounting space with the edge beam; the second protective plate and the first protective plate are arranged at the same end of the edge beam and connected to the edge beam, the second protective plate is located on a side of the first protective plate that is away from the mounting space, the second protective plate is spaced apart from the first protective plate to define a gas outlet channel, and the gas outlet channel connects the first cavity and the mounting space; and the battery module is arranged in the mounting space. The battery pack and power unit provided in the present application can effectively reduce the risks that other components inside the battery pack cannot be used normally and the entire battery pack experiences thermal runaway due to the thermal runaway of battery cells.

## Description

### CROSS REFERENCE TO RELATED APPLICATION

The present application claims priority to Chinese Patent Applications No. CN202322155824.3 and No. CN202322162382.5 entitled "BATTERY PACK" and filed with the China National Intellectual Property Administration on August 10, 2023, and to Chinese Patent Application No. CN202322191076.4 entitled "BATTERY PACK AND POWER UNIT" and filed with the China National Intellectual Property Administration on August 15, 2023, which are incorporated herein by reference in entirety.

### TECHNICAL FIELD

The present application relates to the technical field of batteries, and specifically relates to a battery pack and a power unit.

### BACKGROUND ART

As power battery packs are energy sources for electric vehicles, battery pack technology is crucial to the electric vehicles. Existing power battery packs are characterized by high electric quantity and large capacity. In the event of thermal runaway, the battery pack may generate a large amount of gas and ejecta in a short period of time.

When thermal runaway occurs in a battery cell, a large amount of gas and ejecta are expelled from an explosion-proof valve of the cell. If the gas and ejecta are not released in time, they are very likely to affect the normal use of other components within the battery pack. This may lead to the problems of insulation failure and structural failure of electrical components (wiring harnesses and copper bars) and structural parts, significantly exacerbating the risk of pack-level thermal runaway incurred by cell-level thermal runaway.

### SUMMARY

In view of this, the present application provides a battery pack and a power unit to solve the problems that other components inside a battery pack cannot be used normally and thermal runaway occurs in the entire battery pack due to the thermal runaway of battery cells.

In a first aspect, the present application provides a battery pack, including: an edge beam, where the edge beam is formed in a ring shape, the edge beam has a first cavity inside, a first through hole connected to the first cavity is provided on a peripheral wall of the edge beam, and a first explosion-proof valve is provided in the first through hole; a first protective plate, where the first protective plate is arranged at an end of the edge beam in an axial direction and connected to the edge beam, and the first protective plate is configured to block the end of the edge beam in the axial direction and define a mounting space with the edge beam; a second protective plate, where along the axial direction of the edge beam, the second protective plate and the first protective plate are arranged at the same end of the edge beam and connected to the edge beam, the second protective plate is located on a side of the first protective plate that is away from the mounting space, the second protective plate is spaced apart from the first protective plate to define a gas outlet channel, and the gas outlet channel connects the first cavity and the mounting space; and a battery module, where the battery module is arranged in the mounting space.

According to the battery pack in this embodiment, the first protective plate and the second protective plate can form a double-layer protective structure, thereby greatly increasing the structural strength and protective strength of the battery pack. The first cavity inside the edge beam and the gas outlet channel between the first protective plate and the second protective plate serve as exhaust structures, thereby improving exhaust efficiency of the battery pack, effectively avoiding combustion or even explosion incurred by excessive temperature inside the battery pack, improving space utilization of the battery pack, reducing the size of the battery pack, and lowering the production cost of the battery pack. In the battery pack, the first protective plate, the second protective plate, and the gas outlet channel between the first protective plate and the second protective plate can effectively reduce the risks that other components inside the battery pack cannot be used normally and the entire battery pack experiences thermal runaway due to the thermal runaway of the battery cell.

In some embodiments, the edge beam is provided with a first connection hole at a position opposite to the gas outlet channel, and the first connection hole connects the first cavity and the gas outlet channel.

In some embodiments, the edge beam is further provided with a second connection hole connected to the mounting space.

In some embodiments, the battery module includes a plurality of battery cells, the plurality of battery cells are arranged in rows along a first direction, each row of battery cells includes a plurality of battery cells arranged along a second direction, and every two of the first direction, the second direction, and the axial direction of the edge beam are perpendicular to each other.

In some embodiments, the first protective plate has a second cavity inside, and the second cavity is connected to the first cavity; each battery cell is equipped with a battery cell explosion-proof valve on a side facing the first protective plate, the first protective plate is provided with a plurality of second through holes connected to the gas outlet channel, and each second through hole is arranged opposite to at least one battery cell explosion-proof valve; the second through hole includes a first sub through hole and a second sub through hole, the first sub through hole and the second sub through hole are arranged opposite in the axial direction of the edge beam, the first sub through hole connects the second cavity and the mounting space and is opposite to the battery cell explosion-proof valve, and the second sub through hole connects the gas outlet channel and the second cavity.

In some embodiments, the second cavity includes a plurality of sub cavities arranged along the first direction, each sub cavity is connected to the first cavity at both ends along the second direction, the plurality of sub cavities correspond one to one with the plurality of rows of battery cells, each sub cavity has at least one first sub through hole and one second sub through hole, and the battery cell explosion-proof valve is arranged opposite to the first sub through hole connected to the corresponding sub cavity.

In some embodiments, a side of the first protective plate that faces the mounting space has a plurality of bulges spaced along the first direction, each bulge extends along the second direction, and any bulge is located between two adjacent rows of battery cells.

In some embodiments, the mounting space has a crossbeam inside, both ends of the crossbeam in a length direction are connected to the edge beam respectively, the mounting space includes a first mounting space and a second mounting space located on both sides of the crossbeam, the battery module is arranged in the first mounting space, and electrical components are arranged in the second mounting space.

In some embodiments, the edge beam and the first protective plate are aluminum profile components.

In some embodiments, a plurality of first explosion-proof valves are designed, and the plurality of first explosion-proof valves are arranged at two opposite ends of the edge beam.

In a second aspect, the present application further provides a battery pack, including a shell and a battery cell arranged in the shell, where
the shell includes a bottom substrate and a bottom protective plate located below the bottom substrate, where the bottom substrate is spaced apart from the bottom protective plate to form a cavity; and
a bottom of the battery cell is provided with a battery cell explosion-proof valve, the shell is provided with a battery pack explosion-proof valve, and the battery cell explosion-proof valve can be connected to the battery pack explosion-proof valve through the cavity.

According to the battery pack in this embodiment, the gas and ejecta generated in the event of thermal runaway of the battery cell, after being sprayed out from the battery cell explosion-proof valve, are discharged from the battery pack explosion-proof valve via the cavity, thereby preventing other components inside the battery pack from being affected by the high-temperature gas and ejecta generated by the thermal runaway, and minimizing the impact of the thermal runaway of the battery cell on the battery pack. In addition, the cavity is formed between the bottom substrate and the bottom protective plate, and the battery cell explosion-proof valve is arranged at the bottom of the battery cell, achieving a simple structure and easy arrangement and implementation. The battery pack can effectively reduce the risks that other components inside the battery pack cannot be used normally and the entire battery pack experiences thermal runaway due to the thermal runaway of battery cells.

In some embodiments, a high-temperature resistant protective layer is provided at a top of the bottom protective plate. The high-temperature resistant protective layer can provide protection for the bottom protective plate and prevent the high-temperature gas and ejecta generated in the event of thermal runaway of the battery cell from directly impacting an inner surface of the bottom protective plate, thereby extending the working life of the bottom protective plate.

In some embodiments, the high-temperature resistant protective layer is a mica plate arranged on the bottom protective plate.

In some embodiments, the battery pack explosion-proof valve is connected to the cavity through a flow guide. The flow guide is designed to connect the cavity with the battery pack explosion-proof valve. Meanwhile, a guide channel includes a horizontal portion and a vertical portion, achieving a simple structure and easy processing.

A guide channel is formed on the flow guide, and the guide channel has a vertical portion connected to the cavity and a horizontal portion connected to the battery pack explosion-proof valve.

In some embodiments, the bottom substrate is provided with a connection port configured to connect the battery cell explosion-proof valve with the cavity, a protective plate is provided between the battery cell explosion-proof valve and the connection port, and the protective plate can be damaged by gas and ejecta sprayed out from the battery cell explosion-proof valve. The protective plate provides protection for the battery cell explosion-proof valve, to prevent foreign objects that may appear inside the battery pack from compression damage to the battery cell explosion-proof valve.

In some embodiments, a protrusion protruding towards the connection port is formed on the protective plate, and a clearance space is formed between the protrusion and the battery cell explosion-proof valve.

In some embodiments, a plurality of battery cells are designed in the shell; and
the battery pack further includes a busbar configured to connect poles of the battery cells and a connection copper bar connected to the busbar.

In some embodiments, the busbar and the connection copper bar are arranged at a top of the battery cell. The battery cell explosion-proof valve is arranged at the bottom of the battery cell, while the busbar and the connection copper bar are arranged at the top of the battery cell, so as to achieve thermoelectric separation in the event of thermal runaway of the battery pack.

In some embodiments, the shell further includes an edge support beam arranged on one side of the bottom substrate, high-voltage inserts and low-voltage inserts are provided on the edge support beam, and the high-voltage inserts and the low-voltage inserts are arranged at intervals along a length direction of the edge support beam; and
the battery pack explosion-proof valve is arranged on the edge support beam and located between the high-voltage insert and the low-voltage insert.

In a third aspect, the present application further provides a battery pack, including a battery cell and a shell, where the battery cell is provided with a battery cell explosion-proof valve; the shell includes an upper shell and a lower shell, the upper shell cooperates with the lower shell to construct a mounting space, the battery cell is mounted in the mounting space, an explosion-proof chamber is formed inside the lower shell, the explosion-proof chamber includes a first cavity and a second cavity, the first cavity is located inside a bottom plate of the lower shell, the second cavity is located inside a circumferential side plate of the lower shell, and the first cavity is connected to the second cavity; the lower shell is provided with an exhaust port, the exhaust port is connected to the explosion-proof chamber, and the exhaust port is arranged opposite to the battery cell explosion-proof valve.

According to the battery pack in this embodiment, the explosion-proof chamber is provided inside the lower shell, so that the high-temperature charged substances sprayed from the battery cell enter the explosion-proof chamber, thereby preventing the high-temperature charged substances from entering the mounting space to damage other charged structures inside the battery pack; and the design of the first cavity and the second cavity inside the bottom plate and the side plate respectively not only effectively increases the overall volume of the explosion-proof chamber, but also fully utilizes the internal space of the lower shell to improve space utilization, thereby effectively reducing the risks that other components inside the battery pack cannot be used normally and the entire battery pack experiences thermal runaway due to the thermal runaway of the battery cell.

In some embodiments, the bottom plate has a first plate body and a second plate body, the first plate body is spaced apart from the second plate body to construct the first cavity, the side plate has a third plate body and a fourth plate body, the third plate body is spaced apart from the fourth plate body to construct the second cavity, the first plate body is arranged on a side of the second plate body near the battery cell, and the third plate body is located on a side of the fourth plate body near the battery cell.

In some embodiments, the third plate body surrounds a circumference of the first plate body, and the fourth plate body surrounds a circumference of the second plate body, to construct the second cavity surrounding the lower shell.

In some embodiments, the exhaust port is arranged on the first plate body, the battery cell explosion-proof valve is arranged at a bottom of the battery cell, the plurality of battery cells are arranged along a first direction, the exhaust port extends along the first direction, and in the first direction, the battery cell explosion-proof valves of the plurality of battery cells are all opposite to the exhaust ports.

In some embodiments, at least one row of battery cells is designed in a second direction, at least one exhaust port is designed, the number of rows of battery cells corresponds one to one with the number of exhaust ports, and the second direction is perpendicular to the first direction.

In some embodiments, in the second direction, bosses are provided on the first plate body on both sides of the exhaust port, the bosses extend along the first direction, and upper surfaces of the bosses abut against bottom surfaces of the plurality of battery cells to seal the explosion-proof chamber.

In some embodiments, sealing members are provided between the upper surfaces of the bosses and the bottom surfaces of the plurality of battery cells to seal gaps between the upper surfaces of the bosses and the bottom surfaces of the battery cells.

In some embodiments, in the second direction, clearance spaces are defined between the boss and the third plate body and between the bosses of the two adjacent exhaust ports, water-cooled plates are provided in the clearance spaces, the water-cooled plates extend in the first direction, and upper surfaces of the water-cooled plates are bonded to lower surfaces of the plurality of battery cells.

In some embodiments, the lower shell is provided with an explosion-proof hole, the explosion-proof hole is located on the second plate body or the fourth plate body, the explosion-proof hole connects the explosion-proof chamber and external space, and a second explosion-proof valve is provided in the explosion-proof hole.

In some embodiments, the lower shell includes a support member, the support member is arranged in the first cavity, an upper end of the support member is fixedly connected to the first plate body, and a lower end of the support member is fixedly connected to the second plate body.

In a fourth aspect, the present application further provides a power unit provided with the battery pack as described above.

The power unit described in this embodiment, provided with the battery pack as described above, improves customer satisfaction.

### BRIEF DESCRIPTION OF DRAWINGS

To describe the technical solutions in the embodiments of the present application or in the prior art more clearly, the following briefly describes the accompanying drawings required for describing the specific embodiments or the prior art. Apparently, the accompanying drawings in the following description show merely some embodiments of the present application, and a person of ordinary skill in the art can still derive other drawings from these drawings without inventive efforts.
FIG. 1 is a three-dimensional view of a first structure of a battery pack according to an embodiment of the present application;
FIG. 2 is an exploded view of the first structure of the battery pack according to an embodiment of the present application;
FIG. 3 is an enlarged view of part A in FIG. 2;
FIG. 4 is a three-dimensional view of the first structure of the battery pack according to an embodiment of the present application, where a first protective plate and a battery module are not shown;
FIG. 5 is an enlarged view of part B in FIG. 4;
FIG. 6 is a top view of the first structure of the battery pack according to an embodiment of the present application;
FIG. 7 is a cross-sectional view taken along line C-C in FIG. 6;
FIG. 8 is an enlarged view of part D in FIG. 7;
FIG. 9 is an enlarged view of part E in FIG. 7;
FIG. 10 is a partial top view of a second structure of the battery pack according to an embodiment of the present application;
FIG. 11 is a cross-sectional view taken along line F-F in FIG. 1;
FIG. 12 is an enlarged view of part G in FIG. 2;
FIG. 13 is a partial structural view of the second structure of the battery pack according to an embodiment of the present application;
FIG. 14 is an exploded view of a third structure of the battery pack according to an embodiment of the present application;
FIG. 15 is a top view of the third structure of the battery pack (with an upper shell removed) according to an embodiment of the present application;
FIG. 16 is a cross-sectional view taken along line H-H in FIG. 15;
FIG. 17 is an enlarged view of area I in FIG. 16;
FIG. 18 is an enlarged view of area J in FIG. 16;
FIG. 19 is a schematic structural view of a battery cell in the battery pack according to an embodiment of the present application; and
FIG. 20 is a bottom view of the battery cell in the battery pack according to an embodiment of the present application.

### Reference numerals:

100. Battery pack;
1. Edge beam; 11. First cavity; 12. First through hole; 13. First explosion-proof valve; 14. First connection hole; 15. Second connection hole; 2. First protective plate; 21. Mounting space; 210. Crossbeam; 211. First mounting space; 212. Second mounting space; 22. Second through hole; 221. First sub through hole; 222. Second sub through hole; 23. Second cavity; 24. Bulge; 3. Second protective plate; 31. Gas outlet channel; 4. Battery module; 41. Battery cell;
51. Bottom substrate; 52. Bottom protective plate; 54. Edge support beam; 55. Cavity; 56. Battery cell explosion-proof valve; 7. Battery pack explosion-proof valve; 8. Mica plate; 9. Busbar; 10. Connection copper bar; 511. High-voltage insert; 512. Low-voltage insert; 513. Flow guide; 514. Guide channel; 1401. Vertical portion; 1402. Horizontal portion; 515. Connection port; 16. Protective plate; 1601. Protrusion; 17. Clearance space;
62. Shell; 621. Upper shell; 622. Lower shell; 6221. Explosion-proof chamber; 6222. Exhaust port; 223. Bottom plate; 224. Side plate; 225. Second explosion-proof valve; 226. Support member; 62211. First cavity; 62212. Second cavity; 2231. First plate body; 2232. Second plate body; 2241. Third plate body; 2242. Fourth plate body; 63. Boss; 64. Water-cooled plate.

### DETAILED DESCRIPTION OF EMBODIMENTS

In order to make the objectives, technical solutions, and advantages of the embodiments of the present application clearer, the technical solutions in the embodiments of the present application will be clearly and completely described below in conjunction with the accompanying drawings in the embodiments of the present application. Apparently, the described embodiments are merely some of the embodiments of the present application, not all of them. Based on the embodiments of the present application, all other embodiments obtained by those skilled in the art without any inventive efforts fall within the scope of protection of the present application.

A battery pack 100 in an embodiment is described below with reference to the drawings.

In the related art, when a battery cell is in an abnormal state, discharge or oxidation reaction may occur to generate a large amount of heat and gases. These gases need to be discharged in time, otherwise the pressure in the battery pack increases, which may lead to thermal runaway in the battery pack.

The exhaust channel technology for existing battery packs can meet the exhaust needs of electrochemical energy storage devices such as electric vehicles and hybrid vehicles, but still have some drawbacks: conventional battery packs are limited by structural requirements, leaving little design space for both exhaust channel structures and exhaust ports; and due to the simple exhaust channel, thermal runaway may incur the problems of poor gas circulation and the like, which will hinder normal gas emissions, increase gas pressure inside the battery pack, and lead to risks such as thermal runaway.

The present application aims to solve at least one of the technical problems existing in the prior art. Therefore, the present application proposes a battery pack that can improve exhaust efficiency, avoid combustion or even explosion caused by excessive temperature inside the battery pack, and improve pace utilization.

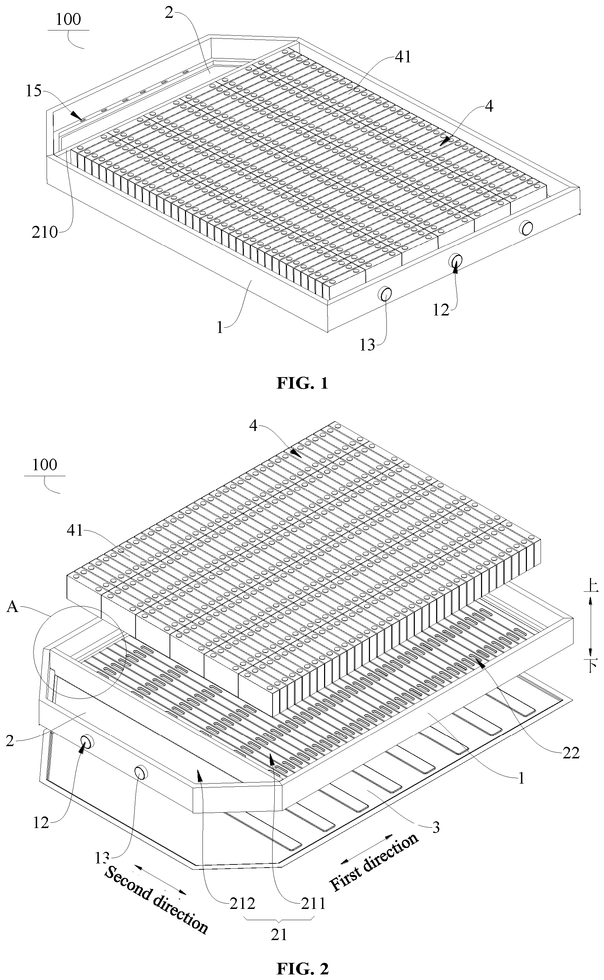

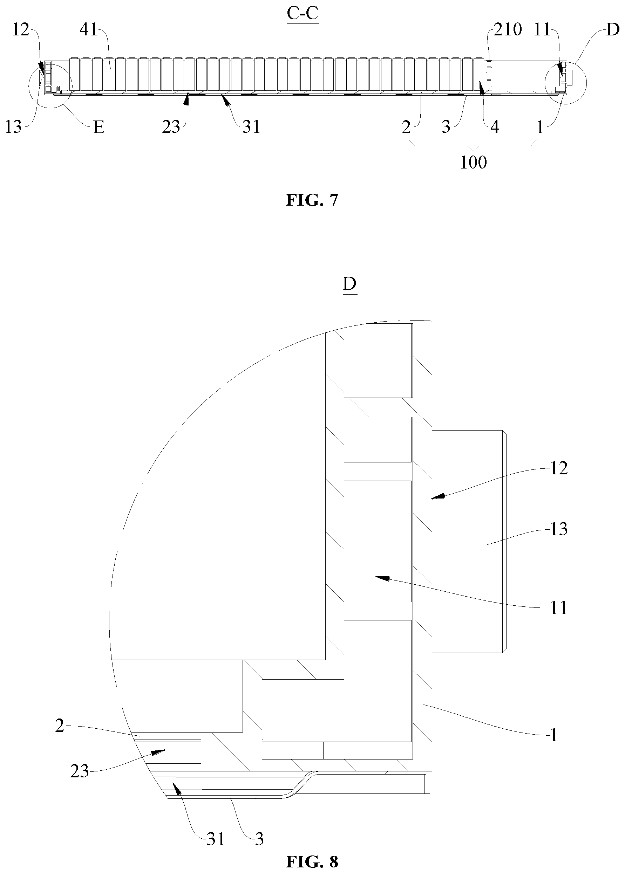

As shown in FIG. 2 and FIG. 7, a battery pack 100 according to the embodiments of the present application includes an edge beam 1, a first protective plate 2, a second protective plate 3, and a battery module 4.

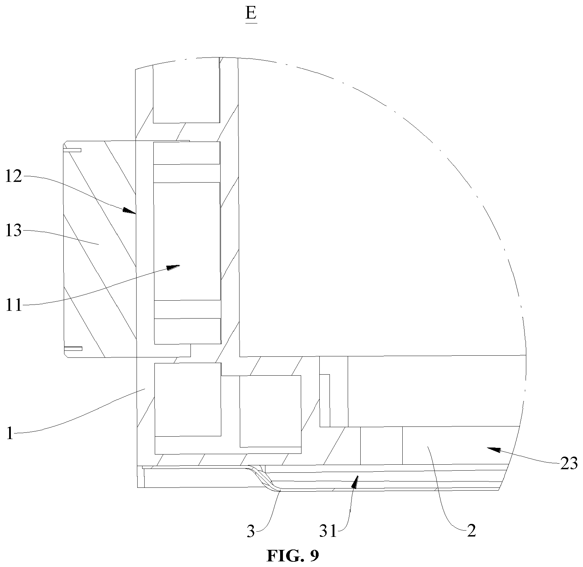

Specifically, as shown in FIGs. 1, 5, and 6, the edge beam 1 is formed in a ring shape and can provide support, the edge beam 1 has a first cavity 11 inside, a first through hole 12 connected to the first cavity 11 is provided on a peripheral wall of the edge beam 1, a first explosion-proof valve 13 is provided in the first through hole 12, the first protective plate 2 is arranged at an end of the edge beam 1 in an axial direction (refer to an up-down direction shown in FIG. 2) and connected to the edge beam 1, and the first protective plate 2 is configured to block the end of the edge beam 1 in the axial direction and define a mounting space 21 with the edge beam 1. As shown in FIG. 8 and FIG. 9, along the axial direction of the edge beam 1, the second protective plate 3 and the first protective plate 2 are arranged at the same end of the edge beam 1 and connected to the edge beam 1, the second protective plate 3 is located on a side of the first protective plate 2 that is away from the mounting space 21, the second protective plate 3 is spaced apart from the first protective plate 2 to define a gas outlet channel 31, the gas outlet channel 31 connects the first cavity 11 and the mounting space 21, and the battery module 4 is arranged in the mounting space 21. The first protective plate 2 and the second protective plate 3 can form a double-layer protective structure, thereby greatly increasing the structural strength of the battery pack 100 and increasing the protective strength of the battery pack 100.

It can be understood that when the battery module 4 experiences thermal runaway, the heat and gas released by the battery module 4 can flow from the mounting space 21 to the gas outlet channel 31, then enter the first cavity 11, and finally flow out of the battery pack 100 via the first explosion-proof valve 13 at the first through hole 12, thereby improving the exhaust efficiency of the battery pack 100, effectively avoiding combustion or even explosion incurred by excessive temperature inside the battery pack 100, and protecting the environment to a certain extent. Moreover, by increasing the strength and airtightness of the exhaust channel, gas leakage of the battery pack 100 in the exhaust process can be effectively reduced.

Optionally, the battery pack 100 can provide power for electric vehicles, hybrid vehicles, or other electrochemical energy storage devices. In charging and discharging processes of the battery pack 100, harmful gases such as hydrogen are generated. Meanwhile, due to overcharging, overdischarging, extreme high or low temperature environments, physical damage, and other reasons, when the battery module 4 inside the battery pack 100 is in an abnormal state, the temperature of the entire battery pack 100 rapidly rises and a large quantity of heat and toxic and harmful gases is generated.

Compared with the prior art, the first cavity 11 inside the edge beam 1 and the gas outlet channel 31 between the first protective plate 2 and the second protective plate 3 serve as exhaust structures in the present application, thereby reducing or even eliminating reserved exhaust space inside the battery pack in the prior art, avoiding loosening and other situations at the connection of an exhaust pipeline in the prior art, improving the space utilization of the battery pack 100, reducing the size of the battery pack 100, and lowering the production cost of the battery pack 100.

Optionally, the first protective plate 2 and the second protective plate 3 are connected by fasteners. The second protective plate 3 is a sheet metal part that can provide certain support and protect the internal structure of the battery pack 100.

In addition, the edge beam in the prior art merely provides support. Due to the generation of debris during processing, more materials are often used to seal the cavity of the edge beam. However, the present application fully utilizes the first cavity 11 of the edge beam 1 as an exhaust channel, whereby the weight of the battery pack 100 is relatively reduced.

In the battery pack 100 according to the embodiments of the present application, the first protective plate 2 and the second protective plate 3 can form a double-layer protective structure, thereby greatly increasing the structural strength of the battery pack 100 and increasing the protective strength of the battery pack 100. The first cavity 11 inside the edge beam 1 and the gas outlet channel 31 between the first protective plate 2 and the second protective plate 3 serve as exhaust structures, thereby improving the exhaust efficiency of the battery pack 100, effectively avoiding combustion or even explosion incurred by excessive temperature inside the battery pack 100, improving the space utilization of the battery pack 100, reducing the size of the battery pack 100, and lowering the production cost of the battery pack 100.

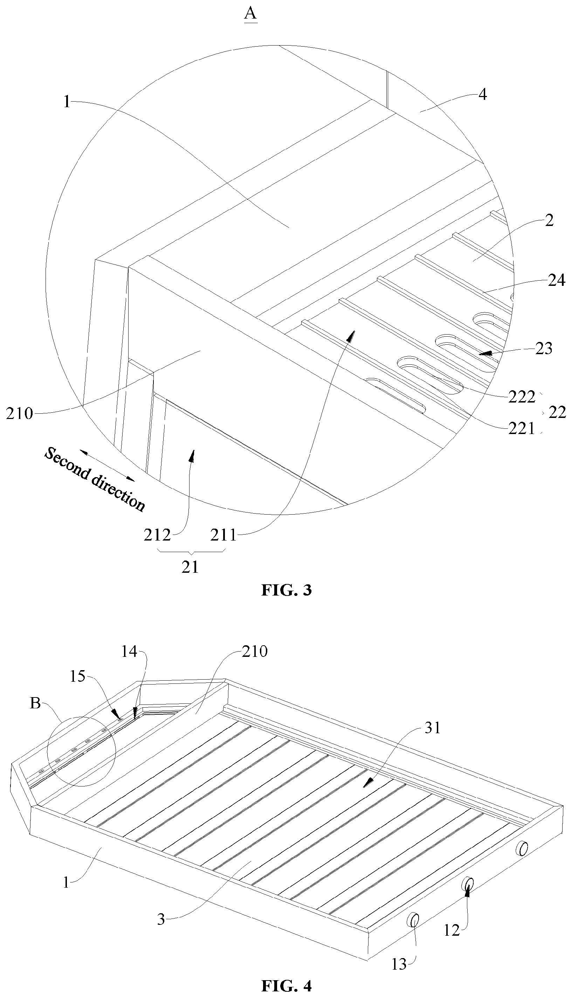

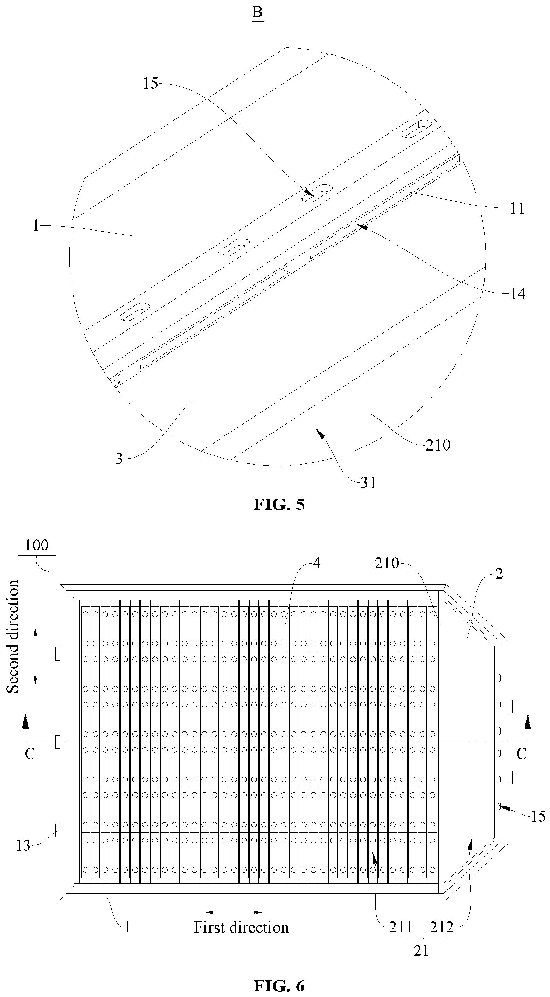

In some embodiments of the present application, as shown in FIG. 4 and FIG. 5, the edge beam 1 is provided with a first connection hole 14 at a position opposite to the gas outlet channel 31, and the first connection hole 14 connects the first cavity 11 and the gas outlet channel 31. The gas released by the battery module 4, after flowing into the gas outlet channel 31 from the mounting space 21, can enter the first cavity 11 via the first connection hole 14 and finally be discharged from the first explosion-proof valve 13.

Further, as shown in FIG. 5, a plurality of first connection holes 14 are provided at intervals in a circumferential direction of the edge beam 1. The gas in the gas outlet channel 31 can flow from the plurality of first connection holes 14 to the first cavity 11, thereby ensuring the structural strength of the edge beam 1, maximizing exhaust efficiency, and reducing the risk of incomplete exhaust or gas accumulation.

In some embodiments of the present application, as shown in FIG. 5, the edge beam 1 is further provided with a second connection hole 15 connected to the mounting space 21, and the second connection hole 15 is connected to the first cavity 11. When the battery module 4 is abnormal and the gas does not flow to the gas outlet channel 31, the gas overflows into the mounting space 21, and the pressure inside the battery pack 100 is excessively high. The second connection hole 15 can allow the gas inside the mounting space 21 to flow to the first cavity 11 and be discharged from the first explosion-proof valve 13, thereby preventing gas accumulation inside the battery pack 100 when the gas overflows and avoiding excessive pressure inside the battery pack 100. Moreover, the second connection hole 15 can also balance gas pressure inside and outside the battery pack 100, preventing the altitude or temperature from affecting the gas pressure inside the pack.

In some embodiments of the present application, as shown in FIGs. 1, 2, and 6, the battery module 4 includes a plurality of battery cells 41, the plurality of battery cells 41 are arranged in rows along a first direction (as shown in FIG. 6), each row of battery cells 41 includes a plurality of battery cells 41 arranged along a second direction (as shown in FIG. 6), and every two of the first direction, the second direction, and the axial direction of the edge beam 1 are perpendicular to each other, thereby increasing the energy density of the battery pack 100, meeting the power demand of the battery pack 100, and enhancing power storage of the battery pack 100. In a specific example, as shown in FIG. 6, the plurality of battery cells 41 are arranged in thirty-six rows along the first direction, and each row of battery cells 41 includes six battery cells 41 arranged along the second direction.

Optionally, the battery cells 41 may be long blade battery cells, short blade battery cells, square battery cells, or any other type of battery cells.

In further embodiments of the present application, as shown in FIG. 3, the first protective plate 2 has a second cavity 23 inside, and the second cavity 23 is connected to the first cavity 11. After the gas produced by the battery cells 41 flows into the second cavity 23 from the explosion-proof valves of the battery cells, the gas can flow out of the battery pack 100 via the first cavity 11.

Further, as shown in FIG. 3, each battery cell 41 is equipped with a battery cell explosion-proof valve on a side facing the first protective plate 2, the first protective plate 2 is provided with a plurality of second through holes 22 connected to the gas outlet channel 31, and each second through hole 22 is arranged opposite to at least one battery cell explosion-proof valve. The second through holes 22 connect the plurality of channels of the battery pack 100 together into a whole.

Furthermore, as shown in FIG. 3, the second through hole 22 includes a first sub through hole 221 and a second sub through hole 222, the first sub through hole 221 and the second sub through hole 222 are arranged opposite in the axial direction of the edge beam 1, the first sub through hole 221 connects the second cavity 23 and the mounting space 21 and is opposite to the battery cell explosion-proof valve, and the second sub through hole 222 connects the gas outlet channel 31 and the second cavity 23. The gas produced by the battery cell 41, after being sprayed from the battery cell explosion-proof valve, passes through the first sub through hole 221, enters the second cavity 23, then enters the gas outlet channel 31 via the second sub through hole 222, enters the first cavity 11 from the first through hole 14, and finally flows out of the battery pack 100 from the first explosion-proof valve 13 at the first through hole 12. It can be understood that the second cavity 23 can further improve the space utilization inside the battery pack 100 and enhance the exhaust efficiency of the battery pack 100.

Optionally, each second through hole 22 may be arranged opposite to one battery cell explosion-proof valve, or each second through hole 22 may be arranged opposite to two or more battery cell explosion-proof valves.

In a further embodiment of the present application, as shown in FIG. 3, the second cavity 23 includes a plurality of sub cavities arranged along the first direction, each sub cavity is connected to the first cavity 11 at both ends along the second direction, the plurality of sub cavities correspond one to one with the plurality of rows of battery cells 41, each sub cavity has at least one first sub through hole 221 and one second sub through hole 222, and the battery cell explosion-proof valve is arranged opposite to the first sub through hole 221 connected to the corresponding sub cavity.

It can be understood that when the battery cell 41 experiences thermal runaway, the gas produced by the battery cell 41 can flow out of the battery pack 100 from two paths: i, the gas produced by the battery cell 41 flows into the corresponding sub cavity from the first sub through hole 221, flows towards both ends of the sub cavity along the second direction, directly enters the first cavity 11, and then is discharged out of the battery pack 100 from the first explosion-proof valve 13 at the first through hole 12; and ii, the gas produced by the battery cell 41 flows into the corresponding sub cavity from the first sub through hole 221 and then is divided into a plurality of streams, and the streams of gas flow to the gas outlet channel 31 from the plurality of second sub through holes 222 in the sub cavity, can thus enter the first cavity 11 via the plurality of first connection holes 14 of the edge beam 1 that are connected to the entire gas outlet channel 31, and is discharged from the explosion-proof valve 13, thereby achieving multi-path and multi-channel exhaust and improving the exhaust efficiency of the battery pack 100.

It should be noted that the battery pack 100 according to the embodiments of the present application is designed to avoid direct contact of all gases and heat with the battery module 4 and the electrical system, thereby avoiding a chain reaction caused by high-temperature impact interference with other battery cells 41 in the event of thermal runaway.

In further embodiments of the present application, as shown in FIG. 2 and FIG. 3, a side of the first protective plate 2 that faces the mounting space 21 has a plurality of bulges 24 spaced along the first direction, each bulge 24 extends along the second direction, and both ends of each bulge 24 in a length direction (refer to the second direction shown in FIG. 3) are connected to the edge beam 1, which can increase the structural strength of the battery pack 100 and improve the reliability of the battery pack 100. Any bulge 24 is located between two adjacent rows of battery cells 41, to achieve a limiting and fixing effect, thereby avoiding displacement of the battery cells 41 and ensuring the stability of the battery module 4.

In some embodiments of the present application, as shown in FIG. 2, the mounting space 21 has a crossbeam 210 inside, both ends of the crossbeam 210 in the length direction (refer to the second direction shown in FIG. 2) are connected to the edge beam 1 respectively, the mounting space 21 includes a first mounting space 211 and a second mounting space 212 located on both sides of the crossbeam 210, the battery module 4 is arranged in the first mounting space 211, and electrical components are arranged in the second mounting space 212. The crossbeam 210 can increase structural strength and improve the reliability of the battery pack 100. In addition, the crossbeam can separate the battery module 4 from the electrical components, to facilitate the assembly of the battery pack 100, avoid high-temperature impact interference with the electrical components in the event of thermal runaway, maximize normal operation of the electrical components, reduce damage to the battery pack 100, improve the maintainability and recovery rate of the battery pack 100, enable the overall system to respond in a timely manner, and ensure that the external escape system and the cooling system can still operate normally, thereby reducing passenger injury.

In some embodiments of the present application, as shown in FIGs. 7, 8, and 9, the edge beam 1 and the first protective plate 2 are aluminum profile components with strong corrosion resistance, high ductility, strong plasticity, low density, and light weight, facilitating lightweight design of the battery pack 100.

In some embodiments of the present application, as shown in FIG. 6, a plurality of first explosion-proof valves 13 are designed, and the plurality of first explosion-proof valves 13 are arranged at two opposite ends of the edge beam 1. The heat and gas discharged by the battery cells 41 can flow out from the plurality of first explosion-proof valves 13, thereby increasing gas emission area, improving exhaust efficiency, and reducing a risk of incomplete exhaust or gas accumulation. Optionally, the plurality of first explosion-proof valves 13 may be provided at the two ends of the edge beam 1 along the first direction, or the plurality of first explosion-proof valves 13 may be provided at the two ends of the edge beam 1 along the second direction, or the plurality of first explosion-proof valves 13 may be provided at intervals in a circumferential direction of the edge beam 1. In a specific example, as shown in FIG. 6, the edge beam 1 is provided with two spaced first explosion-proof valves 13 at one end along the first direction, and three spaced first explosion-proof valves 13 at the other end, which can increase the gas emission area, improve the exhaust efficiency, and reduce the risk of incomplete exhaust or gas accumulation.

The other components and operations of the battery pack 100 according to the embodiments of the present application are known to a person of ordinary skill in the art and will not be described in detail here.

In the prior art, as power battery packs are energy sources for electric vehicles, battery pack technology is crucial to the electric vehicles. Existing power battery packs are characterized by high electric quantity and large capacity. In the event of thermal runaway, the battery pack may generate a large amount of gas and ejecta in a short period of time.

However, limited by the structure of the existing battery pack, when thermal runaway occurs in a battery cell, after a large amount of gas and ejecta are expelled from an explosion-proof valve of the cell, the lack of a dedicated exhaust path affects the normal use of other components in the battery pack and may lead to the problems of insulation failure and structural failure of electrical components (wiring harnesses and copper bars) and structural parts, significantly exacerbating the risk of pack-level failure incurred by cell-level thermal runaway. Although some battery packs are designed with dedicated exhaust channels for thermal runaway of battery cells, most of the battery packs have complex structures and are difficult to arrange.

In view of this, the present application aims to propose a battery pack that is conducive to reducing the impact of thermal runaway of a battery cell on other components inside the battery pack, with a simple structure and easy arrangement and implementation.

This embodiment relates to a battery pack, which generally includes a shell and a battery cell 41 arranged in the shell. The shell includes a bottom substrate 51 and a bottom protective plate 52 located below the bottom substrate 51, the bottom substrate 51 is spaced apart from the bottom protective plate 52 to form a cavity 55, a bottom of the battery cell 41 is provided with a battery cell explosion-proof valve 56, the shell is provided with a battery pack explosion-proof valve 7, and the battery cell explosion-proof valve 56 can be connected to the battery pack explosion-proof valve 7 through the cavity 55.

It can be understood that in this embodiment, the cavity 555 is formed between the bottom substrate 51 and the bottom protective plate 52, and the explosion-proof valve arranged at the bottom of the battery cell 41 can be connected to the battery pack explosion-proof valve 7 through the cavity 55, so that the gas and ejecta generated in the event of thermal runaway of the battery cell 41, after being sprayed out from the battery cell explosion-proof valve 56, are discharged from the battery pack explosion-proof valve 7 via the cavity 55, thereby preventing other components inside the battery pack from being affected by the high-temperature gas and ejecta generated by the thermal runaway, and minimizing the impact of the thermal runaway of the battery cell 41 on the battery pack. In addition, the cavity 55 is formed between the bottom substrate and the bottom protective plate 52, and the battery cell explosion-proof valve 56 is arranged at the bottom of the battery cell 41, achieving a simple structure and easy arrangement and implementation.

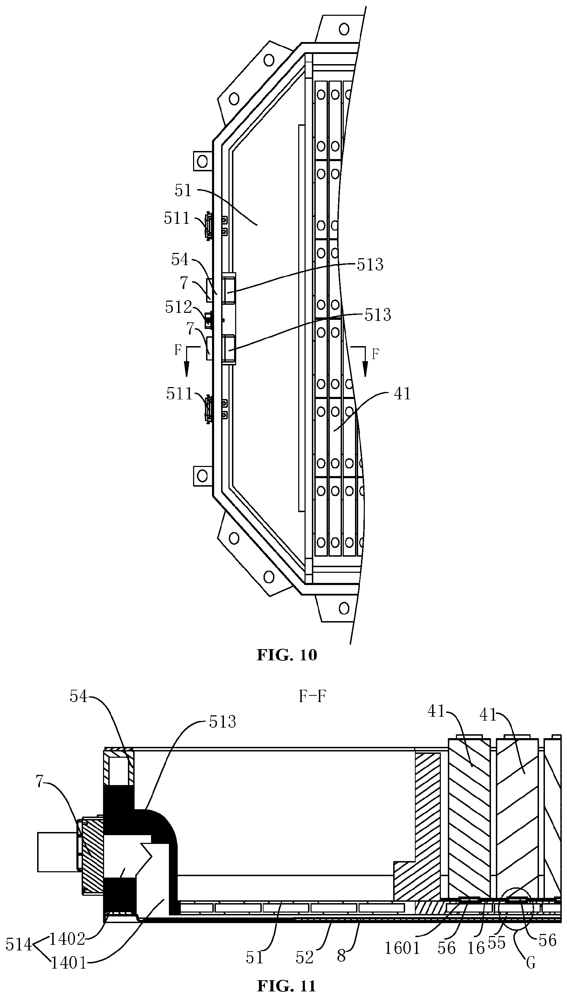

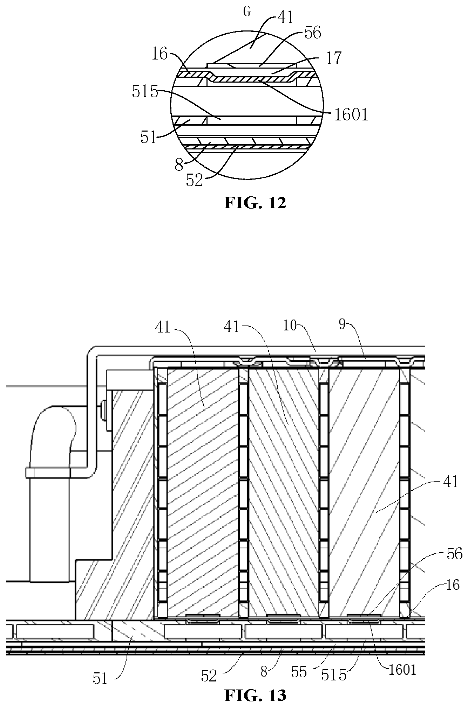

Based on the above overall introduction, an exemplary structure of this embodiment is shown in FIG. 10 to FIG. 13. In a preferred implementation, as shown in FIG. 11 and FIG. 12, in this embodiment, a high-temperature resistant protective layer is provided at a top of the bottom protective plate 52, to provide protection for the bottom protective plate 52 and prevent the high-temperature gas and ejecta generated in the event of thermal runaway of the battery cell 41 from directly impacting an inner surface of the bottom protective plate 52, thereby extending the working life of the bottom protective plate 52. In addition, the bottom protective plate 52, which may be a commonly seen sheet metal part in prior art, is easy to obtain and also convenient for processing and manufacturing.

Preferably, in this embodiment, the high-temperature resistant protective layer is a mica plate 8 arranged on the bottom protective plate 52, which not only provides good protection for the bottom protective plate 52, but also achieves a good insulation effect and is easy to obtain. In this embodiment, the high-temperature resistant protective layer may be replaced not only with the mica plate 8, but also with other high-temperature resistant materials commonly used in the prior art, with good high-temperature resistance.

As a preferred implementation, as shown in FIG. 11, the battery pack explosion-proof valve 7 is connected to the cavity 55 through a flow guide 513. A guide channel 514 is formed on the flow guide 513, and the guide channel 514 has a vertical portion 1401 connected to the cavity 55 and a horizontal portion 1402 connected to the battery pack explosion-proof valve 7. Such design facilitates the connection between the cavity 55 and the battery pack explosion-proof valve 7. The flow channel 514 includes the horizontal portion 1402 and the vertical portion 1401, achieving a simple structure and easy processing.

Preferably, as shown in FIG. 11 and FIG. 12, in this embodiment, the bottom substrate 51 is provided with a connection port 515 configured to connect the battery cell explosion-proof valve 56 with the cavity 55, a protective plate 16 is provided between the battery cell explosion-proof valve 56 and the connection port 515, and the protective plate 16 can be damaged by the gas and ejecta sprayed out from the battery cell explosion-proof valve 56. It can be understood that the designed protective plate 16 provides protection for the battery cell explosion-proof valve 56, to prevent foreign objects that may appear inside the battery pack from compression damage to the battery cell explosion-proof valve 56.

It is worth noting that, as shown in FIG. 11, in this embodiment, the protective plate 16 between each battery cell explosion-proof valve 56 and the corresponding connection port 515 is integrally formed, that is, only a single piece of protective plate 16 is provided in the present application, which facilitates assembly. In a specific implementation process, a plurality of protective plates 16 may be designed. In this case, each protective plate 16 corresponds to one battery cell explosion-proof valve 56 to provide protection for the battery cell 41, and each protective plate 16 is arranged independently.

The protective plate 16 in this embodiment may be a commonly used printed circuit (PC) board in the prior art, so as to provide protection for the battery cell explosion-proof valve 56. Meanwhile, in the event of thermal runaway of the battery cell 41, the protective plate 16 can be damaged by the ejecta from the battery cell 41, so as not to affect the gas and ejecta generated during the thermal runaway of the battery cell 41 from entering the cavity 55.

In addition, as a preferred implementation, a protrusion protruding towards the connection port 515 is formed on the protective plate 16, and a clearance space 17 is formed between the protrusion and the battery cell explosion-proof valve 56. It can be understood that, by forming the clearance space 17 between the protrusion 1601 and the battery cell explosion-proof valve 56, the protective plate 16 will not hinder the instantaneous opening of the battery cell explosion-proof valve 56 in the event of thermal runaway of the battery cell 41, facilitating the timely discharge of the gas and ejecta generated during the thermal runaway of the battery cell 41.

In specific implementation, as shown in FIG. 13, in this embodiment, a plurality of battery cells 41 are designed in the shell. The battery pack further includes a busbar 9 configured to connect poles of the battery cells 41 and a connection copper bar 10 connected to the busbar 9. It can be understood that the designed busbar 9 and connection copper bar 10 facilitate the connection of the poles of the battery cells 41 with other electrical components inside the battery pack, such as a battery management system (BMS), thereby facilitating the output of electrical energy from the battery cells 41 and the management of the battery pack.

It should be noted that the busbar 9 and the connection copper bar 10 in this embodiment are designed according to the structures of the busbar and copper bar in the existing battery pack, and the structures of the busbar 9 and the connection copper bar 10 will not be separately described in detail here.

As a preferred implementation, as shown in FIG. 13, in this embodiment, the busbar 9 and the connection copper bar 10 are arranged at a top of the battery cell 41. It can be understood that in this embodiment, the battery cell explosion-proof valve 56 is arranged at the bottom of the battery cell 41, while the busbar 9 and the connection copper bar 10 are arranged at the top of the battery cell 41, so as to achieve thermoelectric separation in the event of thermal runaway of the battery pack.

Moreover, as shown in FIG. 10, in this embodiment, the shell further includes an edge support beam 54 arranged on one side of the bottom substrate 51, and high-voltage inserts 511 and low-voltage inserts 512 arranged on the edge support beam 54, where the high-voltage inserts 511 and the low-voltage inserts 512 are arranged at intervals along a length direction of the edge support beam 54, and the battery pack explosion-proof valve 7 is arranged on the edge support beam 54 and located between the high-voltage insert 511 and the low-voltage insert 512. In specific implementation, the high-voltage inserts 511 may be sockets for high-voltage connectors commonly used in the prior art, and the low-voltage inserts 512 may be sockets for low-voltage connectors commonly used in the prior art.

Additionally, in this embodiment, the high-voltage inserts 511 and the low-voltage inserts 512 are arranged at intervals along the length direction of the edge support beam 54, and the battery pack explosion-proof valve 7 is arranged between the high-voltage insert 511 and the low-voltage insert 512. Such arrangement achieves a simple structure, facilitates implementation, and improves the compactness of arrangement of various components on the battery pack.

As shown in FIG. 10, totally two high-voltage inserts 511 and one low-voltage insert 512 are designed, the two high-voltage inserts 511 are respectively arranged near two ends of the edge support beam 54 in the length direction, and the low-voltage insert 512 is arranged near a middle position of the edge support beam 54 in the length direction. In addition, totally two battery pack explosion-proof valves 7 are designed, and the two battery pack explosion-proof valves 7 are respectively located between the high-voltage inserts 511 at the two ends and the low-voltage insert 512.

It should be noted that both the battery cell explosion-proof valve 56 and the battery pack explosion-proof valve 7 in this embodiment can be designed according to the structures of commonly used cell explosion-proof valves and battery pack explosion-proof valves on existing battery packs. In addition, the structures of the battery pack that are not mentioned in the above description can also be designed according to the relevant structures of the existing battery packs, and will not be repeated here.

According to the battery pack in this embodiment, the gas and ejecta generated in the event of thermal runaway of the battery cell 41, after being sprayed out from the battery cell explosion-proof valve 56, is discharged from the battery pack explosion-proof valve 7 via the cavity 55, thereby preventing other components inside the battery pack from being affected by the high-temperature gas and ejecta generated during the thermal runaway, and achieving a simple structure and easy arrangement and implementation. In addition, the busbar 9 and the connection copper bar 10 are arranged at the top of the battery cell 41, so as to achieve thermoelectric separation in the event of thermal runaway of the battery pack.

In the prior art, when thermal runaway occurs in a battery pack of an electric vehicle, battery cells in the battery pack spray high-temperature charged substances to generate a large amount of heat. These high-temperature charged substances directly enter the internal space of the battery pack and come into contact with other charged structures inside the battery pack, leading to damage to the other charged structures. In the absence of proper protection, fire and explosion are likely to occur.

The present application aims to solve at least one of the technical problems existing in the prior art. In view of this, the present application proposes a battery pack that can block high-temperature charged substances from entering the interior of the battery pack, and at the same time, has an explosion-proof chamber that can store and discharge the high-temperature charged substances.

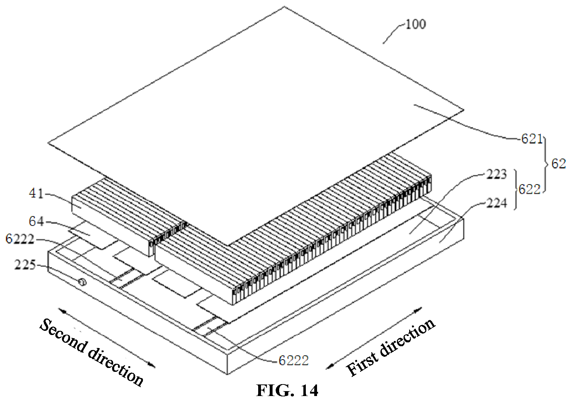

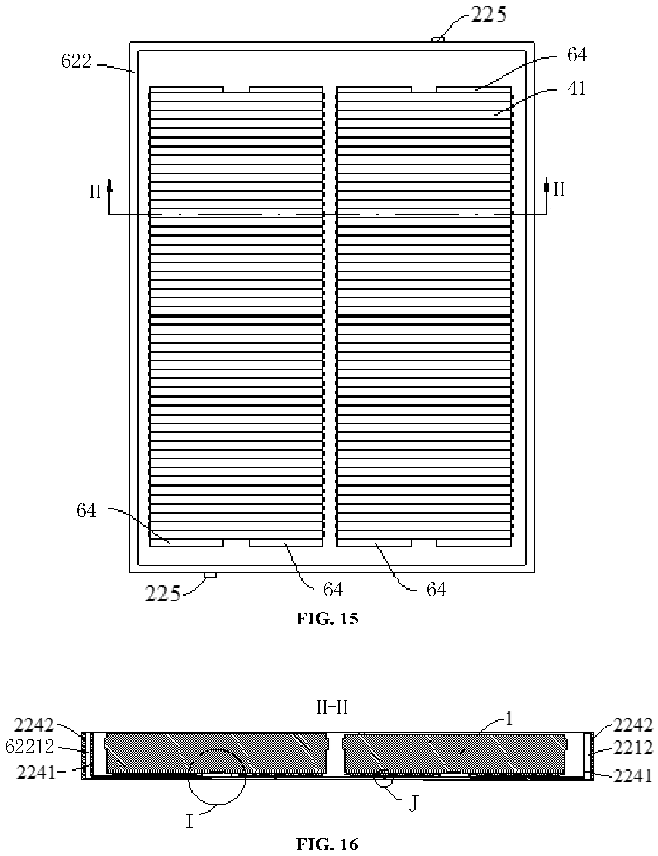

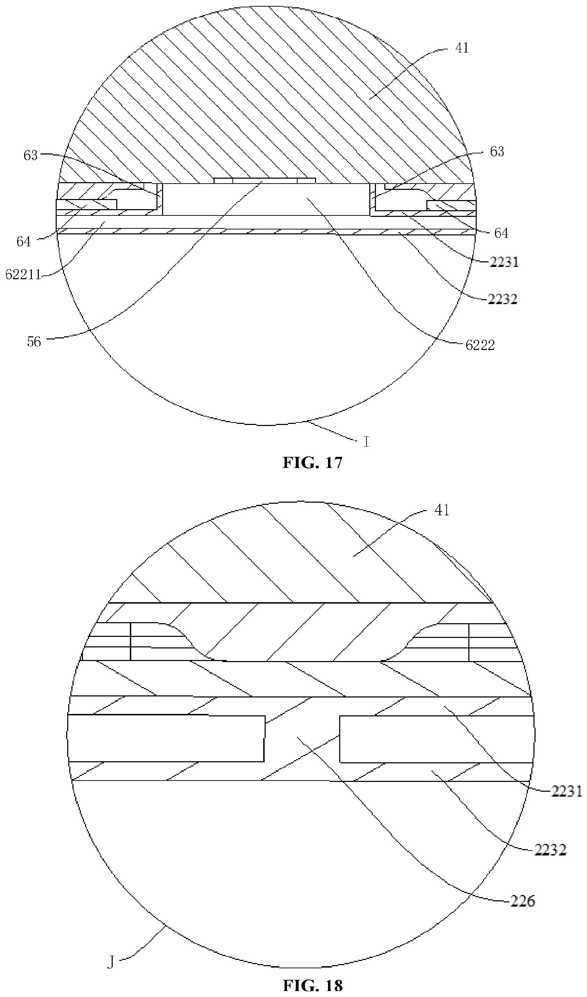

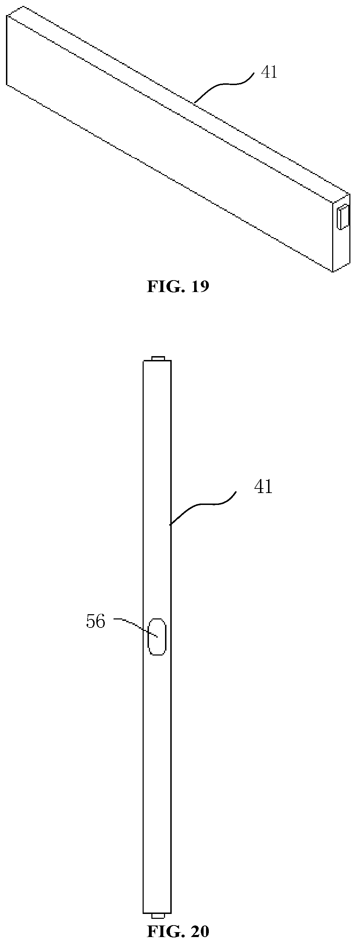

A battery pack 100 according to the embodiments of the present application is described below with reference to FIG. 14 to FIG. 20.

As shown in FIG. 14 to FIG. 20, the battery pack 100 according to the embodiments of the present application includes a battery cell 41 and a shell 62, where the battery cell 41 is provided with a battery cell explosion-proof valve 56; the shell 62 includes an upper shell 621 and a lower shell 622, the upper shell 621 cooperates with the lower shell 622 to construct a mounting space, the battery cell 41 is mounted in the mounting space, an explosion-proof chamber 6221 is formed inside the lower shell 622, the explosion-proof chamber 6221 includes a first cavity 62211 and a second cavity 62212, the first cavity 62211 is located inside a bottom plate 223 of the lower shell 622, the second cavity 62212 is located inside a circumferential side plate 224 of the lower shell 622, and the first cavity 62211 is connected to the second cavity 62212; the lower shell 622 is provided with an exhaust port 6222, the exhaust port 6222 is connected to the explosion-proof chamber 6221, and the exhaust port 6222 is arranged opposite to the battery cell explosion-proof valve 56.

In this embodiment, when the battery pack 100 experiences thermal runaway, the explosion-proof chamber 6221 is configured to accommodate high-temperature charged substances sprayed from the battery cell 41, thereby not only preventing the high-temperature charged substances from entering the interior of the battery pack 100 to corrode and damage other charged structures inside the battery pack 100, but also avoiding explosion of the battery pack 100; the first cavity 62211 and the second cavity 62212 increase the overall volume of the explosion-proof chamber 6221, so that the explosion-proof chamber 6221 can carry more high-temperature charged substances, thereby avoiding overflow of the high-temperature charged substances due to insufficient space of the explosion-proof chamber 6221; the exhaust port 6222 is configured to be connected to the explosion-proof chamber 6221, so that the high-temperature charged substances sprayed from the battery cell explosion-proof valve 56 can enter the explosion-proof chamber 6221 through the exhaust port 6222; and the exhaust port 6222 is opposite to the battery cell explosion-proof valve 56, to prevent the high-temperature charged substances from splashing or spraying out of the exhaust port 6222.

In some embodiments, the exhaust port 6222 can be arranged on a bottom plate 223 and configured to be connected to the first cavity 62211, or arranged on a side plate 224 and configured to be connected to the second cavity 62212. Meanwhile, the exhaust port 6222 may be arranged on both the bottom plate 223 and the side plate 224. The battery cell explosion-proof valve 56 is always arranged opposite to the exhaust port 6222, and the quantity of the battery cell explosion-proof valve 56 is the same as the quantity of the exhaust port 6222.

In the battery pack 100 according to the embodiments of the present application, the explosion-proof chamber 6221 is provided inside the lower shell 622, so that the high-temperature charged substances sprayed from the battery cell 41 enter the explosion-proof chamber 6221, thereby preventing the high-temperature charged substances from entering the mounting space to damage other charged structures inside the battery pack 100; and the design of the first cavity 62211 and the second cavity 62212 inside the bottom plate 223 and the side plate 224 respectively not only effectively increases the overall volume of the explosion-proof chamber 6221, but also fully utilizes the internal space of the lower shell 622 to improve space utilization.

In one embodiment of the present application, as shown in FIG. 14 to FIG. 20, the bottom plate 223 has a first plate body 2231 and a second plate body 2232, the first plate body 2231 is spaced apart from the second plate body 2232 to construct the first cavity 62211, the side plate 224 has a third plate body 2241 and a fourth plate body 2242, the third plate body 2241 is spaced apart from the fourth plate body 2242 to construct the second cavity 62212, the first plate body 2231 is arranged on a side of the second plate body 2232 near the battery cell 41, and the third plate body 2241 is located on a side of the fourth plate body 2242 near the battery cell 41. In this embodiment, the bottom plate 223 of the lower shell 622 is composed of the first plate body 2231 and the second plate body 2232, the side plate 224 is composed of the third plate body 2241 and the fourth plate body 2242, the space between the first plate body 2231 and the second plate body 2232 constitutes the first cavity 62211, the space between the third plate body 2241 and the fourth plate body 2242 constitutes the second cavity 62212, and the first cavity 62211 and the second cavity 62212 are connected to each other. Such design not only enlarges the space of the explosion-proof chamber 6221, but also improves space utilization.

In a specific embodiment of the present application, as shown in FIG. 14 to FIG. 20, the third plate body 2241 surrounds a circumference of the first plate body 2231, and the fourth plate body 2242 surrounds a circumference of the second plate body 2232, to construct the second cavity 62212 surrounding the lower shell 622. In this specific embodiment, as shown in FIGs. 14 and 16 to 18, the entire lower shell 622 is designed with a double-layer structure, where the first plate body 2231 and the third plate body 2241 that are arranged near the battery cell 41 cooperate to constitute a first-layer structure of the lower shell 622, the second plate body 2232 and the fourth plate body 2242 that are arranged away from the battery cell 41 cooperate to constitute a second-layer structure of the lower shell 622, and the first-layer structure is nested inside the second-layer structure. Meanwhile, the third plate body 2241 and the fourth plate body 2242 are connected end to end and circumferentially arranged. As such, the second cavity 62212 between the third plate body 2241 and the fourth plate body 2242 is arranged on the circumference of the lower shell 622, thereby effectively increasing the explosion-proof space.

In a specific embodiment of the present application, as shown in FIG. 14 to FIG. 20, the exhaust port 6222 is arranged on the first plate body 2231, the battery cell explosion-proof valve 56 is arranged at the bottom of the battery cell 41, the plurality of battery cells 41 are arranged along a first direction, the exhaust port 6222 extends along the first direction, and in the first direction, the battery cell explosion-proof valves 56 of the plurality of battery cells 41 are all opposite to the exhaust ports 6222. In this specific embodiment, the exhaust port 6222 is a strip opening extending along the first direction, and the exhaust port 6222 is formed on the first plate body 2231 near the battery cell 41. As such, the bottoms of the plurality of battery cells 41 stacked along the first direction are opposite to the exhaust ports 6222, the explosion-proof valves 56 at the bottoms of all the battery cells 41 are also opposite to the strip exhaust ports 6222, and all the high-temperature charged substances sprayed from the battery cell explosion-proof valves 56 can directly enter the explosion-proof chamber 6221 through the exhaust ports 6222, thereby effectively shortening the pressure relief distance. In addition, the large coverage area of the strip exhaust ports 6222 can ensure sufficient passability.

In a specific embodiment of the present application, as shown in FIG. 14 to FIG. 20, at least one row of battery cells 41 is designed in a second direction, and at least one exhaust port 6222 is designed. The number of rows of battery cells 41 corresponds one to one with the number of exhaust ports 6222, and the second direction is perpendicular to the first direction. In this specific embodiment, in the second direction, only one row of battery cells 41 can be deigned, or a plurality of rows of battery cells 41 can be designed. Meanwhile, one row of battery cells 41 corresponds to one exhaust port 6222, and the plurality of rows of battery cells 41 corresponds to the plurality of exhaust ports 6222, ensuring that the number of rows of battery cells 41 is equal to the number of exhaust ports 6222. In this way, it can ensure that the high-temperature charged substances sprayed from each battery cell 41 can enter the explosion-proof chamber 6221 through the exhaust port 6222.

In a specific embodiment of the present application, as shown in FIG. 14 to FIG. 20, in the second direction, bosses 63 are provided on the first plate body 2231 on both sides of the exhaust port 6222, the bosses 63 extend along the first direction, and upper surfaces of the bosses 63 abut against bottom surfaces of the plurality of battery cells 41 to seal the explosion-proof chamber 6221. In this specific embodiment, the boss 63 can provide support for the battery cell 41 on the one hand, and at the same time, the boss 63 abuts against the battery cell 41 to seal the explosion-proof chamber 6221. On the other hand, the boss can increase the distance between the battery cell explosion-proof valve 56 and the second plate body 2232, avoiding secondary damage to the battery cell 41 when the high-temperature charged substances sprayed from the battery cell explosion-proof valve 56 impact the second plate body 2232 and splash the bottom surface of the battery cell 41 due to excessively short distance.

In a specific embodiment of the present application, as shown in FIG. 14 to FIG. 20, sealing members are provided between the upper surfaces of the bosses 63 and the bottom surfaces of the plurality of battery cells 41 to seal gaps between the upper surfaces of the bosses 63 and the bottom surfaces of the battery cells 41. In this specific embodiment, the sealing member can effectively seal the gap between the upper surface of the boss 63 and the bottom surface of the battery cell 41, preventing the sprayed high-temperature charged substances from entering the mounting space via the gaps to corrode and damage other charged structures.

In some embodiments, the sealing member may be a sealing structural adhesive, sealing ring, etc., which are not specifically limited here.

In a specific embodiment of the present application, as shown in FIG. 14 to FIG. 20, in the second direction, clearance spaces are defined between the boss 63 and the third plate body 2241 and between the bosses 63 of the two adjacent exhaust ports 6222, water-cooled plates 64 are provided in the clearance spaces, the water-cooled plates 64 extend in the first direction, and upper surfaces of the water-cooled plates 64 are bonded to lower surfaces of the plurality of battery cells 41. In this specific embodiment, the water-cooled plate 64 can cool down the battery cell 41, reducing the possibility of thermal runaway of the battery cell 41. Once the battery pack 100 experiences thermal runaway, the avoidance space can protect the water-cooled plate 64 from damage of high-temperature charged substances, thereby reducing damage to the battery pack 100.

In a specific embodiment of the present application, as shown in FIG. 14 to FIG. 20, the lower shell 622 is provided with an explosion-proof hole, the explosion-proof hole is located on the second plate body 2232 or the fourth plate body 2242, the explosion-proof hole connects the explosion-proof chamber 6221 and external space, and a second explosion-proof valve 225 is provided in the explosion-proof hole. In this specific embodiment, when the space in the explosion-proof chamber 6221 is completely filled with the high-temperature charged substances and the pressure in the explosion-proof chamber 6221 is gradually increasing, once the pressure in the explosion-proof chamber 6221 exceeds a pressure threshold of the second explosion-proof valve 225, the second explosion-proof valve 225 opens, and the high-temperature charged substances in the explosion-proof chamber 6221 are discharged to the external space through the second explosion-proof valve 225 to relieve the pressure in the explosion-proof chamber 6221, thereby avoiding explosion of the explosion-proof chamber 6221 due to excessive pressure and enhancing protection for the battery pack 100.

In some embodiments, a plurality of explosion-proof holes may be designed, and explosion-proof valves are respectively provided in the plurality of explosion-proof holes, thereby further improving safety of the battery pack 100.

In a specific embodiment of the present application, as shown in FIG. 14 to FIG. 20, the lower shell 622 includes a support member 226, the support member 226 is arranged in the first cavity 62211, an upper end of the support member 226 is fixedly connected to the first plate body 2231, and a lower end of the support member 226 is fixedly connected to the second plate body 2232. In this specific embodiment, the first cavity 62211 is located inside the bottom plate 223, and the bottom plate 223 carries the plurality of battery cells 41 and other charged structures, so the bottom plate 223 is subjected to large pressure, making the first cavity 62211 prone to deformation or collapse. The support member 226 can effectively support the first cavity 62211 to improve the structural strength and support of the bottom plate 223 and avoid collapse of the first cavity 62211.

The other components and operations of the battery pack 100 according to the embodiments of the present application are known to a person of ordinary skill in the art and will not be described in detail here.

An embodiment relates to a power unit provided with the battery pack described in any of the above embodiments.

The power unit in this embodiment, provided with the battery pack described in any of the above embodiments, improves customer satisfaction.

In the description, the reference term "one embodiment", "some embodiments", "example", "specific example", or "some examples" means specific features, structures, materials, or characteristics described in conjunction with the embodiment or example are included in at least one embodiment or example of the present application. In the description, the schematic expressions of the above terms do not necessarily refer to the same embodiments or examples. Moreover, the described specific features, structures, materials, or characteristics may be combined in any one or more embodiments or examples in an appropriate manner. In addition, those skilled in the art can incorporate and combine different embodiments or examples and features of different embodiments or examples in the description of this specification on a non-contradictory basis.

Although the embodiments of the present application are shown and described, it can be understood by those of ordinary skill in the art that various changes, modifications, substitutions, and alterations can be made to these embodiments without departing from the principles and spirit of the present application. The scope of the present application is defined by the claims and equivalents thereof.

### Industrial Applicability

The first protective plate, the second protective plate, and the gas outlet channel between the first protective plate and the second protective plate can effectively reduce the risks that other components inside the battery pack cannot be used normally and the entire battery pack experiences thermal runaway due to the thermal runaway of the battery cell. The gas and ejecta generated in the event of thermal runaway of the battery cell, after being sprayed out from the battery cell explosion-proof valve, are discharged from the battery pack explosion-proof valve via the cavity, thereby preventing other components inside the battery pack from being affected by the high-temperature gas and ejecta generated by the thermal runaway, and minimizing the impact of the thermal runaway of the battery cell on the battery pack. In addition, the cavity is formed between the bottom substrate and the bottom protective plate, and the battery cell explosion-proof valve is arranged at the bottom of the battery cell, achieving a simple structure and easy arrangement and implementation, and effectively reducing the risks that other components inside the battery pack cannot be used normally and the entire battery pack experiences thermal runaway due to the thermal runaway of the battery cell. The explosion-proof chamber is provided inside the lower shell, so that the high-temperature charged substances sprayed from the battery cell enter the explosion-proof chamber, thereby preventing the high-temperature charged substances from entering the mounting space to damage other charged structures inside the battery pack; and the design of the first cavity and the second cavity inside the bottom plate and the side plate respectively not only effectively increases the overall volume of the explosion-proof chamber, but also fully utilizes the internal space of the lower shell to improve space utilization, thereby effectively reducing the risks that other components inside the battery pack cannot be used normally and the entire battery pack experiences thermal runaway due to the thermal runaway of the battery cell.

## Claims

1. A battery pack, comprising:
an edge beam, wherein the edge beam is formed in a ring shape, the edge beam has a first cavity inside, a first through hole connected to the first cavity is provided on a peripheral wall of the edge beam, and a first explosion-proof valve is provided in the first through hole;
a first protective plate, wherein the first protective plate is arranged at an end of the edge beam in an axial direction and connected to the edge beam, and the first protective plate is configured to block the end of the edge beam in the axial direction and define a mounting space with the edge beam;
a second protective plate, wherein along the axial direction of the edge beam, the second protective plate and the first protective plate are arranged at the same end of the edge beam and connected to the edge beam, the second protective plate is located on a side of the first protective plate that is away from the mounting space, the second protective plate is spaced apart from the first protective plate to define a gas outlet channel, and the gas outlet channel connects the first cavity and the mounting space; and
a battery module, wherein the battery module is arranged in the mounting space.

2. The battery pack as claimed in claim 1, wherein the edge beam is provided with a first connection hole at a position opposite to the gas outlet channel, and the first connection hole connects the first cavity and the gas outlet channel.

3. The battery pack as claimed in claim 1, wherein the edge beam is further provided with a second connection hole connected to the mounting space.

4. The battery pack as claimed in claim 1, wherein the battery module comprises a plurality of battery cells, the plurality of battery cells are arranged in rows along a first direction, each row of battery cells comprises a plurality of battery cells arranged along a second direction, and every two of the first direction, the second direction, and the axial direction of the edge beam are perpendicular to each other.

5. The battery pack as claimed in claim 4, wherein the first protective plate has a second cavity inside, and the second cavity is connected to the first cavity; each battery cell is equipped with a battery cell explosion-proof valve on a side facing the first protective plate, the first protective plate is provided with a plurality of second through holes connected to the gas outlet channel, and each second through hole is arranged opposite to at least one battery cell explosion-proof valve; the second through hole comprises a first sub through hole and a second sub through hole, the first sub through hole and the second sub through hole are arranged opposite in the axial direction of the edge beam, the first sub through hole connects the second cavity and the mounting space and is opposite to the battery cell explosion-proof valve, and the second sub through hole connects the gas outlet channel and the second cavity.

6. The battery pack as claimed in claim 5, wherein the second cavity comprises a plurality of sub cavities arranged along the first direction, each sub cavity is connected to the first cavity at both ends along the second direction, the plurality of sub cavities correspond one to one with the plurality of rows of battery cells, each sub cavity has at least one first sub through hole and one second sub through hole, and the battery cell explosion-proof valve is arranged opposite to the first sub through hole connected to the corresponding sub cavity.

7. The battery pack as claimed in claim 4, wherein a side of the first protective plate that faces the mounting space has a plurality of bulges spaced along the first direction, each bulge extends along the second direction, and any bulge is located between two adjacent rows of battery cells.

8. The battery pack as claimed in claim 1, wherein the mounting space has a crossbeam inside, both ends of the crossbeam in a length direction are connected to the edge beam respectively, the mounting space comprises a first mounting space and a second mounting space located on both sides of the crossbeam, the battery module is arranged in the first mounting space, and electrical components are arranged in the second mounting space;
the edge beam and the first protective plate are aluminum profile components; and
a plurality of first explosion-proof valves are designed, and the plurality of first explosion-proof valves are arranged at two opposite ends of the edge beam.

9. A battery pack, comprising:
a shell and a battery cell arranged in the shell, wherein
the shell comprises a bottom substrate and a bottom protective plate located below the bottom substrate, wherein the bottom substrate is spaced apart from the bottom protective plate to form a cavity; and
a bottom of the battery cell is provided with a battery cell explosion-proof valve, the shell is provided with a battery pack explosion-proof valve, and the battery cell explosion-proof valve can be connected to the battery pack explosion-proof valve through the cavity.

10. The battery pack as claimed in claim 9, wherein a high-temperature resistant protective layer is provided at a top of the bottom protective plate; and
the high-temperature resistant protective layer is a mica plate arranged on the bottom protective plate.

11. The battery pack as claimed in claim 9, wherein the battery pack explosion-proof valve is connected to the cavity through a flow guide; and
a guide channel is formed on the flow guide, and the guide channel has a vertical portion connected to the cavity and a horizontal portion connected to the battery pack explosion-proof valve.

12. The battery pack as claimed in claim 9, wherein the bottom substrate is provided with a connection port configured to connect the battery cell explosion-proof valve with the cavity, a protective plate is provided between the battery cell explosion-proof valve and the connection port, and the protective plate can be damaged by gas and ejecta sprayed out from the battery cell explosion-proof valve.

13. The battery pack as claimed in claim 12, wherein a protrusion protruding towards the connection port is formed on the protective plate, and a clearance space is formed between the protrusion and the battery cell explosion-proof valve.

14. The battery pack as claimed in claim 9, wherein a plurality of battery cells are designed in the shell;
the battery pack further comprises a busbar configured to connect poles of the battery cells and a connection copper bar connected to the busbar; and
the busbar and the connection copper bar are arranged at a top of the battery cell.

15. The battery pack as claimed in claim 9, wherein the shell further comprises an edge support beam arranged on one side of the bottom substrate, high-voltage inserts and low-voltage inserts are provided on the edge support beam, and the high-voltage inserts and the low-voltage inserts are arranged at intervals along a length direction of the edge support beam; and
the battery pack explosion-proof valve is arranged on the edge support beam and located between the high-voltage insert and the low-voltage insert.

16. A battery pack, comprising:
a battery cell, wherein the battery cell is provided with a battery cell explosion-proof valve; and
a shell, wherein the shell comprises an upper shell and a lower shell, the upper shell cooperates with the lower shell to construct a mounting space, the battery cell is mounted in the mounting space, an explosion-proof chamber is formed inside the lower shell, the explosion-proof chamber comprises a first cavity and a second cavity, the first cavity is located inside a bottom plate of the lower shell, the second cavity is located inside a circumferential side plate of the lower shell, and the first cavity is connected to the second cavity;
wherein the lower shell is provided with an exhaust port, the exhaust port is connected to the explosion-proof chamber, and the exhaust port is arranged opposite to the battery cell explosion-proof valve.

17. The battery pack as claimed in claim 16, wherein the bottom plate has a first plate body and a second plate body, the first plate body is spaced apart from the second plate body to construct the first cavity, the side plate has a third plate body and a fourth plate body, the third plate body is spaced apart from the fourth plate body to construct the second cavity, the first plate body is arranged on a side of the second plate body near the battery cell, and the third plate body is located on a side of the fourth plate body near the battery cell.

18. The battery pack as claimed in claim 17, wherein the third plate body surrounds a circumference of the first plate body, and the fourth plate body surrounds a circumference of the second plate body, to construct the second cavity surrounding the lower shell.

19. The battery pack as claimed in claim 17, wherein the exhaust port is arranged on the first plate body, the battery cell explosion-proof valve is arranged at a bottom of the battery cell, the plurality of battery cells are arranged along a first direction, the exhaust port extends along the first direction, and in the first direction, the battery cell explosion-proof valves of the plurality of battery cells are all opposite to the exhaust ports.

20. The battery pack as claimed in claim 19, wherein at least one row of battery cells is designed in a second direction, at least one exhaust port is designed, the number of rows of battery cells corresponds one to one with the number of exhaust ports, and the second direction is perpendicular to the first direction.

21. The battery pack as claimed in claim 20, wherein in the second direction, bosses are provided on the first plate body on both sides of the exhaust port, the bosses extend along the first direction, and upper surfaces of the bosses abut against bottom surfaces of the plurality of battery cells to seal the explosion-proof chamber.

22. The battery pack as claimed in claim 21, wherein sealing members are provided between the upper surfaces of the bosses and the bottom surfaces of the plurality of battery cells to seal gaps between the upper surfaces of the bosses and the bottom surfaces of the battery cells.

23. The battery pack as claimed in claim 21, wherein in the second direction, clearance spaces are defined between the boss and the third plate body and between the bosses of the two adjacent exhaust ports, water-cooled plates are provided in the clearance spaces, the water-cooled plates extend in the first direction, and upper surfaces of the water-cooled plates are bonded to lower surfaces of the plurality of battery cells.

24. The battery pack as claimed in claim 17, wherein the lower shell is provided with an explosion-proof hole, the explosion-proof hole is located on the second plate body or the fourth plate body, the explosion-proof hole connects the explosion-proof chamber and external space, and a second explosion-proof valve is provided in the explosion-proof hole; and
the lower shell comprises a support member, the support member is arranged in the first cavity, an upper end of the support member is fixedly connected to the first plate body, and a lower end of the support member is fixedly connected to the second plate body.

25. A power unit, wherein the power unit is provided with the battery pack as claimed in any of claims 1 to 24.
